# EUROPEAN PATENT SPECIFICATION

(11) **EP 4 322 293 B1**
(45) Date of publication and mention of the grant of the patent: **25.11.2026**
(21) Application number: 22916535.2
(22) Date of filing: 09.12.2022
(51) Int. Cl.: H01M 50/143, H01M 50/204, H01M 50/383

(54) **BATTERY MODULE, BATTERY PACK INCLUDING THE BATTERY MODULE, AND ENERGY STORAGE SYSTEM AND VEHICLE INCLUDING THE BATTERY PACK**
BATTERIEMODUL, BATTERIEPACK MIT DEM BATTERIEMODUL SOWIE ENERGIESPEICHERVORRICHTUNG UND FAHRZEUG MIT DEM BATTERIEPACK
MODULE DE BATTERIE, BLOC-BATTERIE INCLUANT UN MODULE DE BATTERIE, ET DISPOSITIF DE STOCKAGE D'ÉNERGIE ET VÉHICULE INCLUANT UN BLOC-BATTERIE

(30) Priority: 27.12.2021 KR 20210189010
(43) Date of publication of application: 14.02.2024
(73) Proprietor: LG Energy Solution, Ltd., Seoul 07335 (KR)
(72) Inventor: OK, Seung-Min, Daejeon 34122 (KR); KIM, Seung-Hyun, Daejeon 34122 (KR); OH, Young-Hoo, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/020052
(87) International publication number: WO 2023/128390

(56) References cited:
- CN-A- 108 767 146
- CN-A- 113 381 113
- CN-A- 113 540 640
- JP-B2- 5 933 344
- KR-A- 20170 061 582
- KR-A- 20180 137 292
- KR-A- 20210 112 161
- US-A1- 2014 170 447

## Description

### TECHNICAL FIELD

The present disclosure relates to a battery module, a battery pack including the battery module, and an energy storage system and a vehicle including the battery pack.

The present application claims priority to Korean Patent Application No. 10-2021-0189010 filed on December 27, 2021 in the Republic of Korea

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

Meanwhile, when a battery pack is configured by connecting a plurality of battery cells in series/parallel, in general, a battery module including at least one battery cell is first configured, and other components are added using the at least one battery module to configure a battery pack or a battery rack.

A conventional battery module generally includes a plurality of battery cells stacked with each other and a module housing accommodating the plurality of battery cells. In the case of such a conventional battery module, when overheating occurs in a specific battery cell among the plurality of battery cells due to an abnormal situation, the heat generated in the overheated battery cell is transferred to adjacent battery cells as it is to generate thermal runaway, resulting in greater risks such as explosion of the battery module.

Therefore, it is required to find a way to provide a battery module capable of preventing thermal runaway when an abnormal situation occurs in a battery cell, a battery pack including the battery module, and an energy storage system and a vehicle including the battery pack.

Document US 2014/170447 A1 relates to a battery housing having an interior space for accommodating galvanic cells, in particular lithium-ion cells, which are provided with at least one cut-out area which can be opened in the event of failure of the cell. Document CN 108 767 146 A relates to a protective structure, and in particular to a protective structure for suppressing thermal runaway of a battery core with fire extinguishing effect. Document KR 2021 0112161 A relates to a battery module capable of more rapidly extinguishing thermal runaway or fire at an early stage when thermal runaway occurs in the battery module or fire occurs due to the thermal runaway or the like.

### DISCLOSURE

### Technical Problem

The present disclosure is designed to solve the problems of the related art, and therefore the present disclosure is directed to providing a battery module capable of preventing thermal runaway when an abnormal situation occurs in a battery cell, a battery pack including the battery module, and an energy storage system and a vehicle including the battery pack.

### Technical Solution

In the present disclosure, there is provided a battery module, comprising: at least one battery cell; a module case accommodating the at least one battery cell; at least one leakage prevention pocket provided in the module case to prevent leakage of flame or spark in case of an abnormal situation of the at least one battery cell; and a fire extinguishing capsule unit provided to the at least one leakage prevention pocket and configured to discharge a fire extinguishing agent into the module case by the flame or spark in the event of the abnormal situation.

Also, the leakage prevention pocket is provided in plurality, and the plurality of leakage prevention pockets are disposed with the at least one battery cell interposed therebetween.

Also, preferably, the plurality of leakage prevention pockets may be provided on edge portions of both sides of the module case.

Also, the plurality of leakage prevention pockets have a predetermined space capable of accommodating the flame or spark.

Also, preferably, the plurality of leakage prevention pockets may be provided in a direction facing the moving direction of the flame or spark in the event of the abnormal situation.

Also, preferably, the fire extinguishing capsule unit may be provided to at least one of the plurality of leakage prevention pockets.

Also, preferably, the fire extinguishing capsule unit may be provided to an inner wall of at least one of the plurality of leakage prevention pockets.

Also, preferably, the fire extinguishing capsule unit may include a capsule body mounted to the at least one leakage prevention pocket; and the fire extinguishing agent accommodated inside the capsule body.

Also, preferably, the capsule body may be melted at a predetermined temperature or broken by a predetermined impact to send the fire extinguishing agent out of the capsule body.

Also, preferably, the fire extinguishing capsule unit may be provided in plurality, and the plurality of fire extinguishing capsule units may be disposed to face each other with the at least one battery cell interposed therebetween.

Also, preferably, the fire extinguishing agent may be provided as a fire extinguishing liquid or a fire extinguishing gas.

In addition, the present disclosure provides a battery pack, comprising: at least one battery module according to the above embodiments; and a pack case accommodating the at least one battery module.

In addition, the present disclosure provides an energy storage system, comprising at least one battery pack according to the above embodiment.

In addition, the present disclosure provides a vehicle, comprising at least one battery pack according to the above embodiment.

### Advantageous Effects

According to various embodiments as described above, there may be provided a battery module capable of preventing thermal runaway when an abnormal situation occurs in a battery cell, a battery pack including the battery module, and an energy storage system and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a battery module according to an embodiment of the present disclosure.
FIG. 2 is an exploded perspective view of the battery module of FIG. 1.
FIG. 3 is a cross-sectional view of the battery module of FIG. 1.
FIG. 4 is an enlarged view of a main part of the battery module of FIG. 3.
FIGS. 5 and 6 are diagrams for explaining a thermal runaway prevention mechanism of the battery module of FIG. 1.
FIG. 7 is a diagram for explaining a battery pack according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

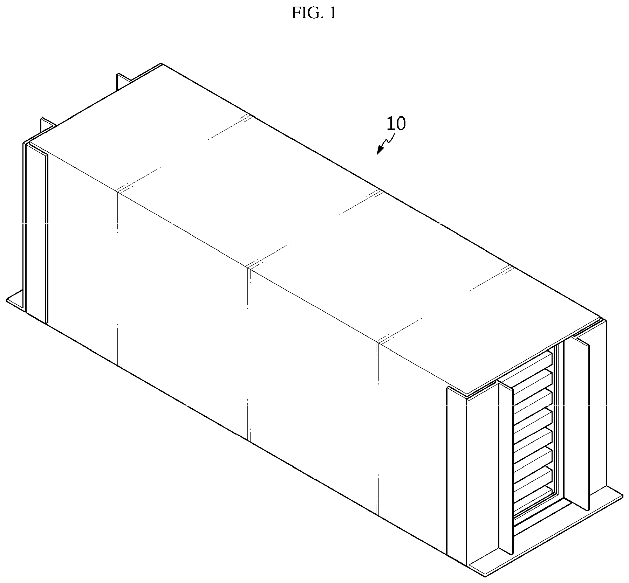

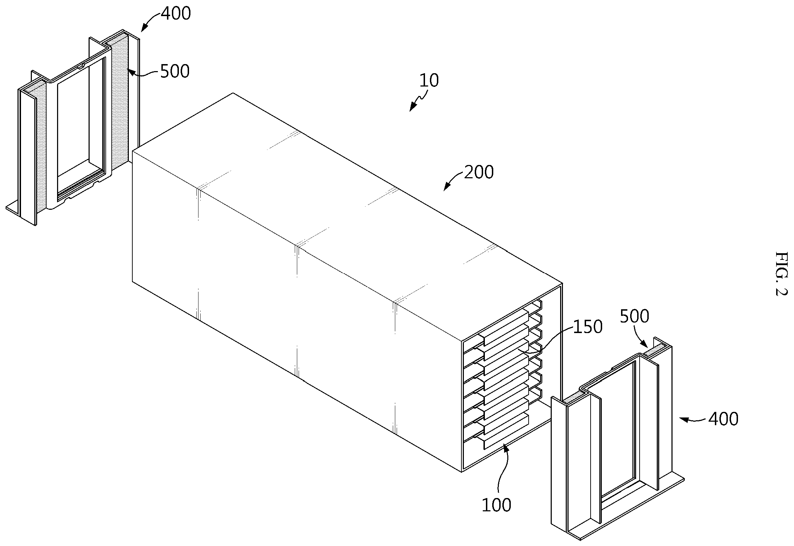

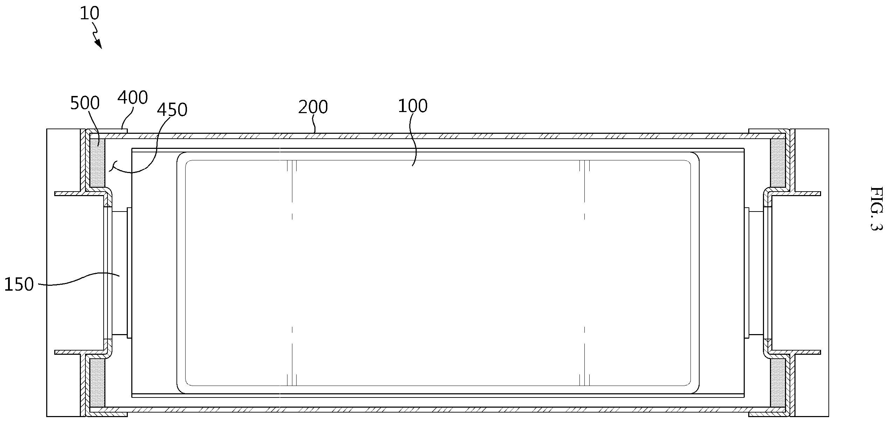

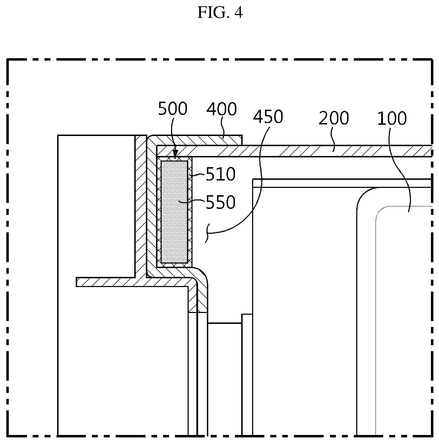

FIG. 1 is a diagram for explaining a battery module according to an embodiment of the present disclosure, FIG. 2 is an exploded perspective view of the battery module of FIG. 1, FIG. 3 is a cross-sectional view of the battery module of FIG. 1, and FIG. 4 is an enlarged view of a main part of the battery module of FIG. 3.

Referring to FIGS. 1 to 4, the battery module 10 may include a battery cell 100, a module case 200, a leakage prevention pocket 400, and a fire extinguishing capsule unit 500.

The battery cell 100 is a secondary battery, and may be provided as a pouch-type secondary battery, a prismatic secondary battery, or a cylindrical secondary battery. Hereinafter, in the present embodiment, the battery cell 100 will be described as being provided as a pouch-type secondary battery.

The battery cell 100 may include an electrode assembly, a battery case accommodating the electrode assembly, and an electrode lead 150 protruding out of the battery case and connected to the electrode assembly. The electrode lead 150 senses the voltage of the battery cell 100 and may be coupled with a bus bar assembly (not shown) mounted to the module case 200 described later.

The battery cell 100 may be provided in at least one or in plurality. Hereinafter, in this embodiment, the battery cell 100 is limitedly described as being provided in plurality in a stacked manner so as to be electrically connected to each other.

The module case 200 may accommodate the at least one battery cell 100, or the plurality of battery cells 100 in this embodiment. To this end, an accommodation space capable of accommodating the plurality of battery cells 100 may be provided in the module case 200.

The leakage prevention pocket 400 is provided within the module case 200, and may prevent leakage of spark or flame F in an abnormal situation of the at least one battery cell 100.

The leakage prevention pocket 400 may be provided in plurality. The plurality of leakage prevention pockets 400 may be disposed with the at least one battery cell 100 interposed therebetween.

The plurality of leakage prevention pockets 400 may be provided on edge portions of both sides of the module case 200. The plurality of leakage prevention pockets 400 may be provided in a direction facing the moving direction of the flame or spark F in the abnormal situation.

The plurality of leakage prevention pockets 400 has a predetermined space 450 capable of accommodating the flame or spark F. The predetermined space 450 may be provided in a predetermined shape capable of accommodating the flame or spark F. For example, the predetermined space 450 is convexly formed in the edge area of the module case 200 to form a predetermined space inside.

The fire extinguishing capsule unit 500 is provided to the at least one leakage prevention pocket 400, and in the event of an abnormal situation, may send the fire extinguishing agent 550 into the module case by the flame or spark F.

The fire extinguishing capsule unit 500 may be provided to at least one of the plurality of leakage prevention pockets 400. In addition, the fire extinguishing capsule unit 500 may be provided on an inner wall of at least one of the plurality of leakage prevention pockets 400.

The fire extinguishing capsule unit 500 may be provided in plurality. The plurality of fire extinguishing capsule units 500 may be disposed to face each other with the at least one battery cell 100 interposed therebetween. In addition, the plurality of fire extinguishing capsule units 500 may be disposed to face each other with the electrode lead 150 of the at least one battery cell 100 interposed therebetween.

The plurality of fire extinguishing capsule units 500 may include a capsule body 510 and the fire extinguishing agent 550, respectively.

The capsule body 510 is mounted to the at least one leakage prevention pocket 400 and may be disposed inside the space 450. The capsule body 510 may be melted at a predetermined temperature or broken by a predetermined impact to send the fire extinguishing agent 550 out of the capsule body 510. Specifically, the capsule body 510 may send the fire extinguishing agent 550 out of the capsule body 510 while being melted or broken by the flame or spark F.

The fire extinguishing agent 550 may be accommodated in the capsule body 510. The fire extinguishing agent 550 may include a liquid or gaseous material capable of extinguishing a fire, such as a fire extinguishing liquid or a fire extinguishing gas. The present disclosure is not limited thereto, and the fire extinguishing agent 550 may be provided as other types of materials capable of extinguishing fire or the like, or a mixture of these materials, of course.

Hereinafter, a thermal runaway prevention mechanism when an abnormal situation occurs in the battery module 10 according to this embodiment will be described in more detail.

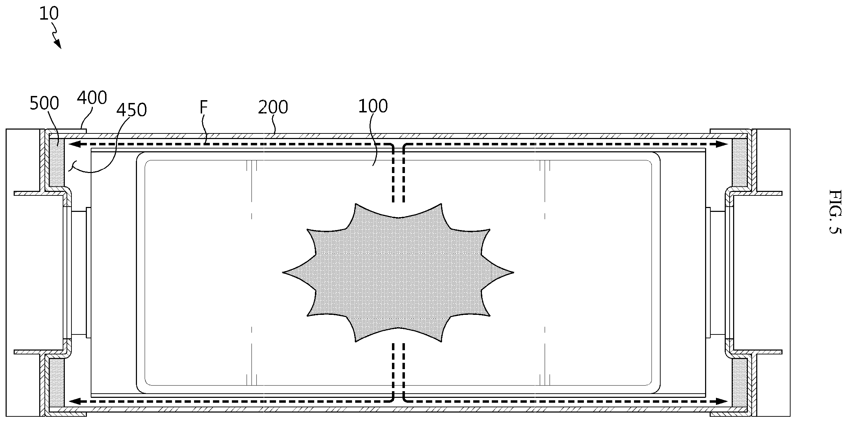

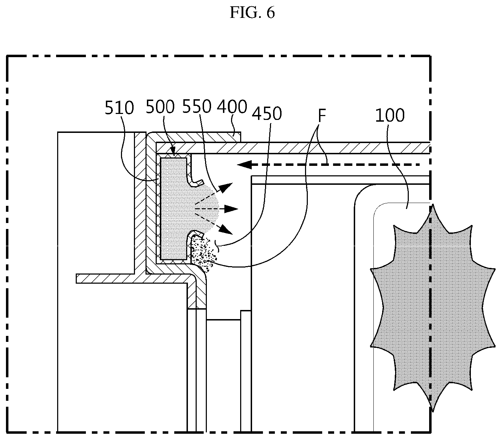

FIGS. 5 and 6 are diagrams for explaining a thermal runaway prevention mechanism of the battery module of FIG. 1.

Referring to FIGS. 5 and 6, in at least one of the battery cells 100 of the battery module 10, a dangerous situation that may lead to a fire or the like may occur due to overheating caused by an abnormal situation.

A flame or spark F generated in the battery cell 100 in which the abnormal situation occurs within the module case 200 of the battery module 10 is blocked by the leakage prevention pocket 400, so that leakage out of the module case 200 may be prevented. That is, the leakage prevention pocket 400 may suppress dangerous situations such as thermal runaway or fire by blocking the flame or spark F from oxygen outside the module case 200.

In addition, particles or residue generated from the flame or spark F may be deposited in the space 450 of the leakage prevention pocket 400 and accumulated in the space 450 without escaping to the outside of the module case 200.

At this time, the fire extinguishing capsule unit 500 in the leakage prevention pocket 400 may spray the fire extinguishing agent 550 while the capsule body 510 is melted or torn by the flame or spark F. That is, the fire extinguishing capsule unit 500 may additionally suppress thermal runaway and fire within the leakage prevention pocket 400.

As such, in the event of the abnormal situation, since the battery module 10 according to this embodiment may suppress thermal runaway and fire through at least two methods through the leakage prevention pocket 400 and the fire extinguishing capsule unit 500, the thermal runaway suppression and fire suppression effect can be maximized in the abnormal situation.

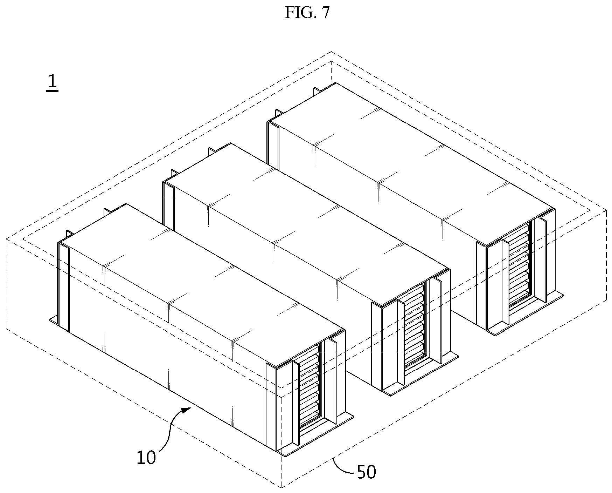

FIG. 7 is a diagram for explaining a battery pack according to an embodiment of the present disclosure.

Referring to FIG. 7, a battery pack 1 may include at least one or a plurality of battery modules 10 of the previous embodiment and a pack case 50 for accommodating the at least one or plurality of battery modules 10.

At least one or more battery packs 1 may be provided as an energy source of an energy storage system or a vehicle. In addition, it is also possible that the battery pack 1 is provided in other devices, instruments, and facilities using a secondary battery, in addition to the energy storage system or the vehicle.

As such, devices, the instruments and equipment including the battery pack 1 such as an energy storage system or a vehicle including the battery pack 1 according to the present embodiment may implement devices, instruments, facilities, or the like such as an energy storage system or a vehicle having all the advantages by the battery module 10 described above.

According to various embodiments as described above, there may be provided a battery module 10 capable of preventing thermal runaway when an abnormal situation occurs in a battery cell 100, a battery pack 1 including the battery module 10, and an energy storage system and a vehicle including the battery pack 1.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery module (10), comprising:
at least one battery cell (100);
a module case (200) accommodating the at least one battery cell (100);
at least one leakage prevention pocket (400) provided in the module case (200) to prevent leakage of flame or spark in case of an abnormal situation of the at least one battery cell (100); and
a fire extinguishing capsule unit (500) provided to the at least one leakage prevention pocket (400) and configured to discharge a fire extinguishing agent (550) into the module case (200) by the flame or spark (F) in the event of the abnormal situation,
wherein the leakage prevention pocket (400) is provided in plurality, and
wherein the plurality of leakage prevention pockets (400) are disposed with the at least one battery cell (100) interposed therebetween,
wherein the plurality of leakage prevention pockets (400) have a predetermined space (450) capable of accommodating the flame or spark (F), and
the predetermined space (450) is convexly formed in an edge area of the module case (200).

2. The battery module (10) according to claim 1, wherein the plurality of leakage prevention pockets (400) are provided on edge portions of both sides of the module case (200).

3. The battery module (10) according to claim 1, wherein the plurality of leakage prevention pockets (500) are provided in a direction facing the moving direction of the flame or spark (F) in the event of the abnormal situation.

4. The battery module according to claim 1, wherein the fire extinguishing capsule unit (500) is provided to at least one of the plurality of leakage prevention pockets (400).

5. The battery module (10) according to claim 1, wherein the fire extinguishing capsule unit (500) is provided to an inner wall of at least one of the plurality of leakage prevention pockets (400).

6. The battery module (10) according to claim 1, wherein the fire extinguishing capsule unit (500) includes:
a capsule body (510) mounted to the at least one leakage prevention pocket (400); and
the fire extinguishing agent (550) accommodated inside the capsule body.

7. The battery module (10) according to claim 6, wherein the capsule body is (510) melted at a predetermined temperature or broken by a predetermined impact to send the fire extinguishing agent (550) out of the capsule body (510).

8. The battery module (10) according to claim 1, wherein the fire extinguishing capsule unit (500) is provided in plurality, and
wherein the plurality of fire extinguishing capsule units (500) are disposed to face each other with the at least one battery cell (100) interposed therebetween.

9. The battery module (10) according to claim 1, wherein the fire extinguishing agent (550) is provided as a fire extinguishing liquid or a fire extinguishing gas.

10. A battery pack (1), comprising:
at least one battery module (10) according to claim 1; and
a pack case (50) accommodating the at least one battery module (10).

11. An energy storage system, comprising at least one battery pack (1) according to claim 10.

12. A vehicle, comprising at least one battery pack (1) according to claim 10.

## Patentansprüche

1. Batteriemodul (10), umfassend:
• mindestens eine Batteriezelle (100);
• ein Modulgehäuse (200), das die mindestens eine Batteriezelle (100) aufnimmt;
• mindestens eine Leckage-Präventionstasche (400), die in dem Modulgehäuse (200) vorgesehen ist, um das Austreten von Flammen oder Funken im Falle eines abnormalen Zustands der mindestens einen Batteriezelle (100) zu verhindern; und
• eine Feuerlöschkapseleinheit (500), die an der mindestens einen Leckage-Präventionstasche (400) vorgesehen und so konfiguriert ist, dass sie im Falle des abnormalen Zustands durch die Flamme oder den Funken (F) ein Feuerlöschmittel (550) in das Modulgehäuse (200) abgibt,
wobei die Leckage-Präventionstasche (400) in Mehrzahl vorgesehen ist, und
wobei die Mehrzahl von Leckage-Präventionstaschen (400) so angeordnet ist, dass die mindestens eine Batteriezelle (100) dazwischen angeordnet ist,
wobei die Mehrzahl von Leckage-Präventionstaschen (400) einen vorbestimmten Raum (450) aufweist, der in der Lage ist, die Flamme oder den Funken (F) aufzunehmen, und
der vorbestimmte Raum (450) in einem Randbereich des Modulgehäuses (200) konvex ausgebildet ist.

2. Batteriemodul (10) nach Anspruch 1, wobei die Mehrzahl von Leckage-Präventionstaschen (400) an Randabschnitten beider Seiten des Modulgehäuses (200) vorgesehen ist.

3. Batteriemodul (10) nach Anspruch 1, wobei die Mehrzahl von Leckage-Präventionstaschen (500) in einer Richtung vorgesehen ist, die der Bewegungsrichtung der Flamme oder des Funkens (F) im Falle des abnormalen Zustands zugewandt ist.

4. Batteriemodul nach Anspruch 1, wobei die Feuerlöschkapseleinheit (500) an mindestens einer der Mehrzahl von Leckage-Präventionstaschen (400) vorgesehen ist.

5. Batteriemodul (10) nach Anspruch 1, wobei die Feuerlöschkapseleinheit (500) an einer Innenwand mindestens einer der Mehrzahl von Leckage-Präventionstaschen (400) vorgesehen ist.

6. Batteriemodul (10) nach Anspruch 1, wobei die Feuerlöschkapseleinheit (500) Folgendes umfasst:
• einen Kapselkörper (510), der an der mindestens einen Leckage-Präventionstasche (400) montiert ist; und
• das Feuerlöschmittel (550), das im Inneren des Kapselkörpers aufgenommen ist.

7. Batteriemodul (10) nach Anspruch 6, wobei der Kapselkörper (510) bei einer vorbestimmten Temperatur geschmolzen oder durch einen vorbestimmten Stoß zerbrochen wird, um das Feuerlöschmittel (550) aus dem Kapselkörper (510) herauszubewegen.

8. Batteriemodul (10) nach Anspruch 1, wobei die Feuerlöschkapseleinheit (500) in Mehrzahl vorgesehen ist, und
wobei die Mehrzahl von Feuerlöschkapseleinheiten (500) so angeordnet ist, dass sie einander zugewandt sind, wobei die mindestens eine Batteriezelle (100) dazwischen angeordnet ist.

9. Batteriemodul (10) nach Anspruch 1, wobei das Feuerlöschmittel (550) als Feuerlöschflüssigkeit oder Feuerlöschgas vorgesehen ist.

10. Batteriepack (1), umfassend:
• mindestens ein Batteriemodul (10) nach Anspruch 1; und
• ein Packgehäuse (50), das das mindestens eine Batteriemodul (10) aufnimmt.

11. Energiespeichersystem, umfassend mindestens ein Batteriepack (1) nach Anspruch 10.

12. Fahrzeug, umfassend mindestens ein Batteriepack (1) nach Anspruch 10.

## Revendications

1. Module de batterie (10), comprenant :
• au moins une cellule de batterie (100) ;
• un boîtier de module (200) logeant l'au moins une cellule de batterie (100) ;
• au moins une poche de prévention de fuite (400) disposée dans le boîtier de module (200) pour empêcher une fuite de flamme ou d'étincelle en cas de situation anormale de l'au moins une cellule de batterie (100) ; et
• une unité de capsule d'extinction d'incendie (500) disposée sur l'au moins une poche de prévention de fuite (400) et configurée pour décharger un agent d'extinction d'incendie (550) dans le boîtier de module (200) par la flamme ou l'étincelle (F) dans le cas de la situation anormale,
dans lequel la poche de prévention de fuite (400) est fournie en une pluralité, et
dans lequel la pluralité de poches de prévention de fuite (400) sont disposées avec l'au moins une cellule de batterie (100) interposée entre elles,
dans lequel la pluralité de poches de prévention de fuite (400) présentent un espace prédéterminé (450) capable de recevoir la flamme ou l'étincelle (F), et
l'espace prédéterminé (450) est formé de manière convexe dans une zone de bord du boîtier de module (200).

2. Module de batterie (10) selon la revendication 1, dans lequel la pluralité de poches de prévention de fuite (400) sont disposées sur des parties de bord des deux côtés du boîtier de module (200).

3. Module de batterie (10) selon la revendication 1, dans lequel la pluralité de poches de prévention de fuite (500) sont disposées dans une direction faisant face à la direction de déplacement de la flamme ou de l'étincelle (F) dans le cas de la situation anormale.

4. Module de batterie selon la revendication 1, dans lequel l'unité de capsule d'extinction d'incendie (500) est disposée sur au moins une de la pluralité de poches de prévention de fuite (400).

5. Module de batterie (10) selon la revendication 1, dans lequel l'unité de capsule d'extinction d'incendie (500) est disposée sur une paroi interne d'au moins une de la pluralité de poches de prévention de fuite (400).

6. Module de batterie (10) selon la revendication 1, dans lequel l'unité de capsule d'extinction d'incendie (500) comprend :
• un corps de capsule (510) monté sur l'au moins une poche de prévention de fuite (400) ; et
• l'agent d'extinction d'incendie (550) logé à l'intérieur du corps de capsule.

7. Module de batterie (10) selon la revendication 6, dans lequel le corps de capsule (510) est fondu à une température prédéterminée ou brisé par un impact prédéterminé pour envoyer l'agent d'extinction d'incendie (550) hors du corps de capsule (510).

8. Module de batterie (10) selon la revendication 1, dans lequel l'unité de capsule d'extinction d'incendie (500) est fournie en pluralité, et
dans lequel la pluralité d'unités de capsule d'extinction d'incendie (500) sont disposées pour faire face les unes aux autres avec l'au moins une cellule de batterie (100) interposée entre elles.

9. Module de batterie (10) selon la revendication 1, dans lequel l'agent d'extinction d'incendie (550) est fourni sous forme de liquide d'extinction d'incendie ou de gaz d'extinction d'incendie.

10. Bloc-batterie (1), comprenant :
• au moins un module de batterie (10) selon la revendication 1 ; et
• un boîtier de bloc (50) logeant l'au moins un module de batterie (10).

11. Système de stockage d'énergie, comprenant au moins un bloc-batterie (1) selon la revendication 10.

12. Véhicule, comprenant au moins un bloc-batterie (1) selon la revendication 10.
